# EUROPEAN PATENT APPLICATION

(11) **EP 4 530 554 A1**
(43) Date of publication of application: **02.04.2025**
(21) Application number: 24824478.2
(22) Date of filing: 25.06.2024
(51) Int. Cl.: F24H 9/13

(54) **PIPE JOINT AND WATER HEATER**

(30) Priority: 03.08.2023 CN 202322101899 U
(71) Applicant: Wuhu Midea Smart Kitchen Appliance Manufacturing Co., Ltd., Wuhu, Anhui 241000 (CN)
(72) Inventor: WU, Junjun, Wuhu, Anhui 241000 (CN); SONG, Ruilun, Wuhu, Anhui 241000 (CN); SHEN, Yongbing, Wuhu, Anhui 241000 (CN)
(74) Representative: RGTH
(86) International application number: PCT/CN2024/101203
(87) International publication number: WO 2025/025912

(57) **Abstract**

Provided are a pipe joint and a water heater. The pipe joint includes a body and a shoulder portion disposed at the body. The shoulder portion is adapted to be inserted into a water heater inner tank. The body is adapted to abut against an outer surface of the water heater inner tank. The shoulder portion has an end face and a first inner wall surface. A first curved surface is formed between the end face and the first inner wall surface. The shoulder portion and the body cooperate to form a step structure, which facilitates an insertion into and positioning with the water heater inner tank. Through forming the shoulder portion with the first curved surface adjacent to the first inner wall surface and the end face, the first curved surface can avoid an obstruction to flow of a raw material when the raw material is coated on an inner surface of the water heater inner tank and an inner wall surface of the pipe joint, which facilitates the flow of the raw material. In this way, a plastic layer formed in the pipe joint has a uniform thickness. Therefore, the inner wall surface of the pipe joint is better covered by the plastic layer to ensure protection of the pipe joint, preventing a water leakage.

## Description

### CROSS-REFERENCE TO RELATED APPLICATION

This application claims priority to Chinese patent application No. 202322101899.3, titled "PIPE JOINT AND WATER HEATER" and filed with China National Intellectual Property Administration on August 03, 2023, the entire contents of which are incorporated herein by reference.

### FIELD

The present invention relates to the field of water heater technologies, and more particularly, to a pipe joint and a water heater.

### BACKGROUND

To prevent corrosion, a water heater inner tank is coated with a protective layer. Since the water heater inner tank requires a pipe joint for water inlet and water outlet, an inner wall surface of the pipe joint also needs to be coated with the protective layer accordingly. In the related art, a raw material for coating the protective layer flows in a molten state. The raw material is prone to a problem of unsmooth flowing when flowing from the water heater inner tank to the pipe joint, resulting in air bubbles in or an uneven thickness of the protective layer formed inside the pipe joint.

### SUMMARY

The present invention aims to solve at least one of the technical problems in the related art to some extent. To this end, the present invention provides a pipe joint.

To achieve the above objective, the present invention discloses a pipe joint. The pipe joint comprises: a main body portion adapted to abut against an outer surface of a water heater inner tank; and a shoulder portion disposed at the main body portion and adapted to be inserted into the water heater inner tank, the shoulder portion having an end face and a first inner wall surface, and a first curved surface being formed between the end face and the first inner wall surface.

Optionally, the first curved surface may be an arc surface.

Optionally, the first curved surface may have a radius of R1, where 0.5 mm≤R1≤2 mm.

Optionally, the shoulder portion may be higher than an inner surface of the water heater inner tank.

Optionally, the shoulder portion may have a first outer wall surface, and a second curved surface may be formed between the end face and the first outer wall surface.

Optionally, the second curved surface may be an arc surface.

Optionally, the second curved surface may have a radius of R2, where 0.5 mm≤R2≤2 mm.

Optionally, the main body portion may have a second inner wall surface, and the second inner wall surface may have a groove.

Optionally, the groove may extend in a circumferential direction of the second inner wall surface.

Optionally, the second inner wall surface may have a plurality of grooves arranged at intervals in an axial direction of the main body portion.

Optionally, the groove may be formed below half of a height of the main body portion.

Optionally, the shoulder portion may define a first through opening. The main body portion may define a second through opening. The groove may be located adjacent to and in communication with the second through opening.

The present invention further discloses a water heater. The water heater comprises the above-mentioned pipe joint, the water heater inner tank, and a plastic layer disposed at an inner surface of the water heater inner tank and an inner wall surface of the pipe joint.

Optionally, the pipe joint may be welded to the outer surface of the water heater inner tank along a circumferential direction of the pipe joint.

In technical solutions of the present invention, the shoulder portion and the main body portion cooperate to form a step structure, which facilitates an insertion into and positioning with the water heater inner tank. Through forming the shoulder portion with the first curved surface adjacent to the first inner wall surface and the end face, the first curved surface can avoid an obstruction to flow of a raw material when the raw material is coated on the inner surface of the water heater inner tank and the inner wall surface of the pipe joint, which facilitates the flow of the raw material. In this way, the plastic layer formed in the pipe joint has a uniform thickness. Therefore, the inner wall surface of the pipe joint is better covered by the plastic layer to ensure protection of the pipe joint, preventing a water leakage.

Other advantages of the present invention will be provided at least in part in the following description, or will become apparent at least in part from the following description, or can be learned from practicing of the present invention.

### BRIEF DESCRIPTION OF THE DRAWINGS

In order to clearly explain technical solutions according to embodiments of the present invention or in the related art, drawings used in the description of the embodiments or the related art are briefly described below. Obviously, the drawings as described below are merely some embodiments of the present invention. Based on these drawings, other designs can be obtained by those skilled in the art without creative effort.
FIG. 1 is a schematic assembled view of a water heater inner tank, a pipe joint, and a joint fitting according to some embodiments (three pipe joints and three joint fittings are provided).
FIG. 2 is a schematic assembled view of a water heater inner tank and a pipe joint according to some embodiments (three pipe joints are provided).
FIG. 3 is an assembled cross-sectional view of a water heater inner tank and a pipe joint according to some embodiments.
FIG. 4 is a cross-sectional view of cooperation between a water heater inner tank, a pipe joint, and a plastic layer according to some embodiments.
FIG. 5 is a cross-sectional view of a pipe joint according to some embodiments.
FIG. 6 is an enlarged view of part A in FIG. 5.

Description of reference numerals of accompanying drawings:
water heater inner tank 1000, water storage cavity 1100, mounting hole 1200, outer surface 1300, inner surface 1400;
pipe joint 2000, inner wall surface 2001, first through opening 2002, second through opening 2003, shoulder portion 2100, first inner wall surface 2110, first outer wall surface 2120, end face 2130, first curved surface 2140, second curved surface 2150, main body portion 2200, second inner wall surface 2210, groove 2211, second outer wall surface 2220;
joint fitting 3000;
plastic layer 4000.

Implementations of the objectives, functional features, and advantages of the present invention will be further described in connection with the embodiments and with reference to the accompanying drawings.

### DETAILED DESCRIPTION OF THE EMBODIMENTS

Technical solutions according to embodiments of the present invention will be described clearly and completely below in combination with accompanying drawings of the embodiments of the present invention. Obviously, the embodiments described below are only a part of the embodiments of the present invention, rather than all embodiments of the present invention. On a basis of the embodiments of the present invention, all other embodiments obtained by those skilled in the art without creative labor shall fall within the protection scope of the present invention.

It should be noted that, each orientation indication (such as up, down, left, right, front, rear, ...) in the embodiments of the present invention is used only for explaining a relative positional relation, movements, etc., between components in a particular pose (as illustrated in the figures). If the particular pose is changed, the orientation indication is changed accordingly.

In the present invention, unless otherwise clearly specified and limited, terms such as "connect", "fix", and the like should be understood in a broad sense. For example, it may be a fixed connection or a detachable connection or connection as one piece; mechanical connection or electrical connection; direct connection or indirect connection through an intermediate; internal communication of two components or the interaction relationship between two components, unless otherwise clearly limited. For those of ordinary skill in the art, the specific meaning of the above-mentioned terms in the present invention can be understood according to specific circumstances.

In addition, description related to "first", "second", and the like in the present invention is only used for descriptive purposes, and cannot be understood as indicating or implying relative importance or implicitly indicating the number of indicated technical features. Therefore, the features associated with "first" and "second" may explicitly or implicitly comprise at least one of the features. In addition, combinations can be performed on the technical solutions according to various embodiments, but these combinations must be based on the fact that they can be realized by those skilled in the art. When a combination of the technical solutions is contradictory or unattainable, the combination of the technical solutions neither exists nor falls within the protection scope claimed by the present invention.

In a first aspect of the present invention, a pipe joint 2000 is disclosed. The pipe joint 2000 will be described in detail below in conjunction with a water heater.

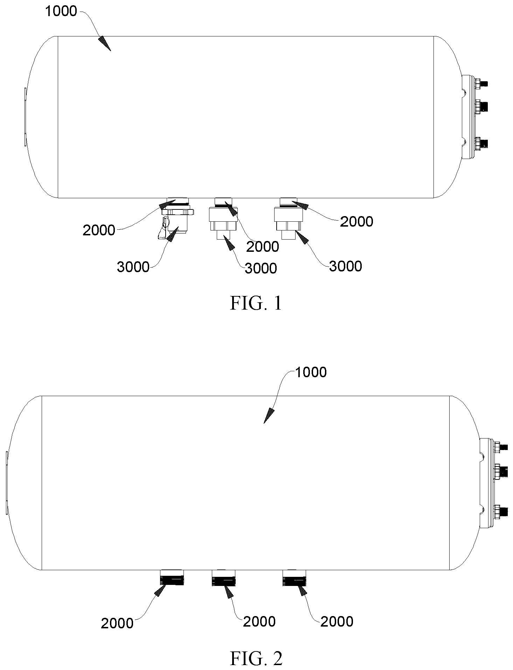

In some embodiments of the present invention, as illustrated in FIG. 1 to FIG. 6, the pipe joint 2000 comprises a shoulder portion 2100 and a main body portion 2200. The shoulder portion 2100 is disposed at the main body portion 2200. When the pipe joint 2000 is mounted at a water heater inner tank 1000, the shoulder portion 2100 needs to be inserted into the water heater inner tank 1000, while the main body portion 2200 needs to abut against an outer surface 1300 of the water heater inner tank 1000. The shoulder portion 2100 has a first inner wall surface 2110 and an end face 2130. A first curved surface 2140 is formed between the first inner wall surface 2110 and the end face 2130. The shoulder portion 2100 and the main body portion 2200 cooperate to form a step structure, which facilitates an insertion into and positioning with the water heater inner tank 1000. Through forming the shoulder portion 2100 with the first curved surface 2140 adjacent to the first inner wall surface 2110 and the end face 2130, the first curved surface 2140 can avoid an obstruction to flow of a raw material when the raw material is coated on an inner surface 1400 of the water heater inner tank 1000 and an inner wall surface 2001 of the pipe joint 2000, which facilitates the flow of the raw material. In this way, a plastic layer 4000 formed in the pipe joint 2000 has a uniform thickness. Therefore, the inner wall surface 2001 of the pipe joint 2000 is better covered by the plastic layer 4000 to ensure protection of the pipe joint 2000, preventing a water leakage.

Specifically, water heaters are categorized into a gas water heater and an electric water heater. The gas water heater heats water using combustion of a gas. The electric water heater heats water using heat generated by electricity. As an example, the present invention describes the water heater as the electric water heater. The water heater inner tank 1000 has a water storage cavity 1100 for storing a certain amount of water. The water heater inner tank 1000 is mounted with a heater for heating the water in the water storage cavity 1100 under an effect of heating of the heater. It should be understood that the water in the water storage cavity 1100 needs to be supplied from an ambient environment and discharged to the ambient environment after being heated. Generally, water inlet and water outlet of the water heater are realized through a water inlet joint and a water outlet joint. The water inlet joint is mounted at the water heater inner tank 1000 and in communication with the water storage cavity 1100. The water inlet joint needs to be connected to an outside water source, e.g., a municipal water source, through a pipeline. The municipal water supply transports, via a pipeline, water to the water storage cavity 1100 through the water inlet joint, until a water level in the water storage cavity 1100 reaches a predetermined water level. Similar to the water inlet joint, the water outlet joint is also mounted at the water heater inner tank 1000 and in communication with the water storage cavity 1100. The water outlet joint needs to be connected to a sprinkler such as a shower through a pipeline. The water in the water storage cavity 1100 is outputted through the water outlet joint. Therefore, the water inlet and the water outlet are realized through the water inlet joint and the water outlet joint. Both the water inlet joint and the water outlet joint are referred to as the pipe joint 2000. It should be understood that the pipe joint 2000 is a joint for realizing flow of water. The pipe joint 2000 is not limited to the water inlet joint and the water outlet joint that are described above, and may also be a joint for mounting a drain valve. The drain valve is a kind of joint fitting 3000. The joint fitting 3000 may be any component connected to the pipe joint 2000. For example, the joint fitting may be integrated with a water inlet pipe, a water outlet pile, and so on.

Generally, the pipe joint 2000 and the water heater inner tank 1000 are manufactured separately and then connected together, to facilitate assembly and a connection between the pipe joint 2000 and the water heater inner tank 1000. In this embodiment, the pipe joint 2000 has the main body portion 2200 and the shoulder portion 2100. The shoulder portion 2100 is disposed at the main body portion 2200. The shoulder portion 2100 and the main body portion 2200 together form the inner wall surface 2001 of the pipe joint 2000. The inner wall surface 2001 of the pipe joint 2000 has a water channel. The shoulder portion 2100 has a smaller radial dimension than the main body portion 2200. In this way, the shoulder portion 2100 and the main body portion 2200 cooperate to form the step structure. The water heater inner tank 1000 has a mounting hole 1200 in communication with the water storage cavity 1100. When the pipe joint 2000 is mounted at the water heater inner tank 1000, the shoulder portion 2100 is inserted into the mounting hole 1200 (i.e., into the water heater inner tank 1000). When the shoulder portion 2100 is inserted into the mounting hole 1200 and reaches a predetermined position, the main body portion 2200 abuts against the outer surface 1300 of the water heater inner tank 1000. In this way, preliminary positioning and mounting of the pipe joint 2000 and the water heater inner tank 1000 is formed, laying a foundation for subsequent fastening. In addition, the shoulder portion 2100 is inserted into the mounting hole 1200 from an outside to an inside, and thus a more sufficient space is provided for mounting operations performed from an outside of the water heater inner tank 1000, which is more convenient for the connection between the pipe joint 2000 and the water heater inner tank 1000.

The water heater inner tank 1000 is made of plastic or metal. Although the water heater inner tank 1000 made of plastic has advantages such as low cost and corrosion resistance, the water heater inner tank 1000 made of plastic has problems such as easy to aging and short life span. On the contrary, the water heater inner tank 1000 made of metal is less susceptible to aging and has a longer life span, but is more costly and not corrosion-resistant. To prevent corrosion of the water heater inner tank 1000 made of metal, the inner surface 1400 of the water heater inner tank 1000 is coated with polymer (a raw material) to form the plastic layer 4000, which protects the water heater inner tank 1000. Usually, the pipe joint 2000 is also made of metal, and thus the inner wall surface 2001 of the pipe joint 2000 also needs to be coated with polymer to form the plastic layer 4000 for protecting the pipe joint 2000. The water heater inner tank 1000 made of metal has high structural strength to ensure pressure bearing performance, while the plastic layer 4000 realizes satisfactory corrosion resistance.

It should be noted that the plastic layer 4000 may be coated on each of the inner surface 1400 of the water heater inner tank 1000 and the inner wall surface 2001 of the pipe joint 2000 through rotational molding. In the rotational molding, the polymer is melted by heat and coated on and adhered to the inner surface 1400 of the water heater inner tank 1000 by gravity. The polymer in a molten state flows from the inner surface 1400 of the water heater inner tank 1000 to the inner wall surface 2001 of the pipe joint 2000, and is then cooled and shaped to form the plastic layer 4000.

When the polymer in the molten state flows from the inner surface 1400 of the water heater inner tank 1000 to the inner wall surface 2001 of the pipe joint 2000, a large change of direction is required. Since the shoulder portion 2100 is inserted into the mounting hole 1200, flow of the polymer in the molten state is obstructed if a right angle is formed between the first inner wall surface 2110 and the end face 2130 of the shoulder portion 2100, which leads to an uneven thickness of the plastic layer 4000 formed by the polymer flowing towards the inner wall surface 2001 of the pipe joint 2000, and even leads to bubbles, jeopardizing protection of the pipe joint 2000. Therefore, in this embodiment, the first curved surface 2140 is formed between the end face 2130 and the first inner wall surface 2110. With transition of the first curved surface 2140, the flow of the polymer is facilitated, which is favorable to the flow of the polymer towards the inner wall surface of the pipe joint 2000, allowing the formed plastic layer 4000 to have the uniform thickness and reducing a likelihood of generation of air bubbles. It should be understood that the plastic layer 4000 can also be prepared through other processes than the rotational molding. Details of the other processes will be omitted here.

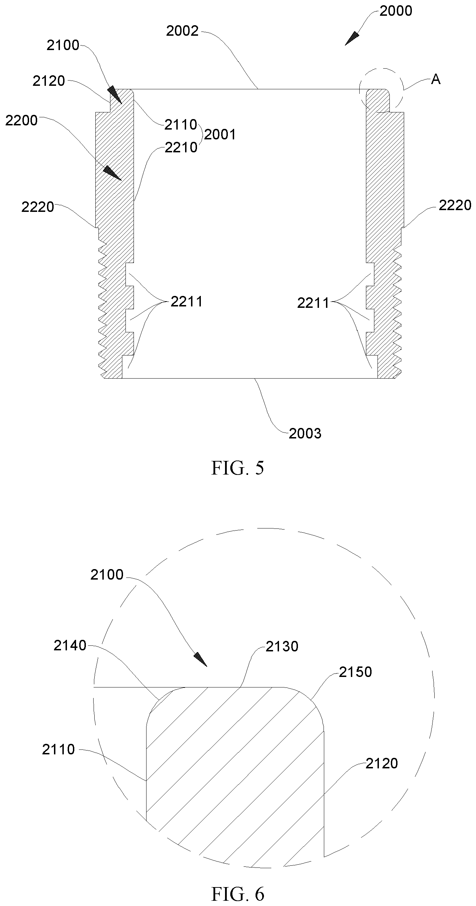

In some embodiments of the present invention, as illustrated in FIG. 6, the first curved surface 2140 is designed as an arc surface. In this way, when the polymer in the molten state flows through the first curved surface 2140, a force of the first curved surface 2140 on the polymer is perpendicular to the first curved surface 2140, which makes the polymer flow through the first curved surface 2140 more stable and less likely to experience a flow disruption. Further, the first curved surface 2140 has a radius of R1, where 0.5 mm≤R1≤2 mm. For example, R1 is 0.5 mm, 1 mm, 1.5 mm, or 2 mm. Preferably, R1 is 1 mm. Therefore, better flow guidance is provided for the polymer in the molten state.

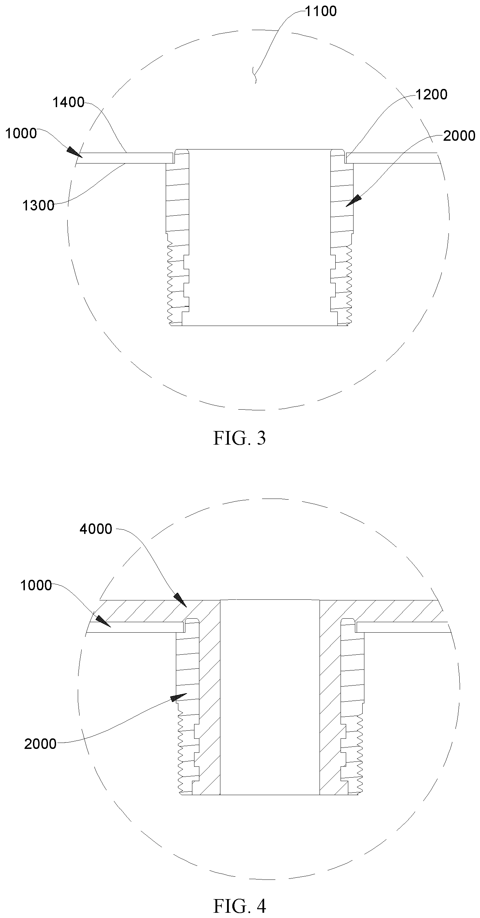

In some embodiments of the present invention, as illustrated in FIG. 3, the shoulder portion 2100 is designed to be higher than the inner surface 1400 of the water heater inner tank 1000, to realize better positioning and mounting of the pipe joint 2000 and the water heater inner tank 1000. It should be understood that, that "higher than" is referenced in an axial direction of the pipe joint 2000 and means that the shoulder portion 2100 needs to protrude into the water storage cavity 1100. A height difference exists between the shoulder portion 2100 and the inner surface 1400 of the water heater inner tank 1000. In this way, during mounting of the pipe joint 2000 and the water heater inner tank 1000, the shoulder portion 2100 is inserted into the mounting hole 1200 to form better interlocking, enabling the pipe joint 2000 to be less likely to wobble. More specifically, when the pipe joint 2000 and the water heater inner tank 1000 are fixed through welding, enabling the shoulder portion 2100 to be higher than the inner surface 1400 of the water heater inner tank 1000 makes the entire pipe joint 2000 more stable during welding, which reduces a probability of welding defects.

In some embodiments of the present invention, as illustrated in FIG. 3, FIG.5, and FIG. 6, the shoulder portion 2100 has a first outer wall surface 2120. A second curved surface 2150 is formed between the first outer wall surface 2120 and the end face 2130. When the polymer in the molten state flows from the inner surface 1400 of the water heater inner tank 1000 to the inner wall surface 2001 of the pipe joint 2000, the second curved surface 2150 is formed between the first outer wall surface 2120 and the end face 2130 considering that the shoulder portion 2100 is higher than the inner surface 1400 of the water heater inner tank 1000. With transition of the second curved surface 2150, the flow of the polymer is facilitated to avoid bubbles at a junction of the pipe joint 2000 and the water heater inner tank 1000. Therefore, the plastic layer 4000 has a more uniform thickness at the junction of the pipe joint 2000 and the water heater inner tank 1000, which forms better protection to avoid a water seepage.

In some embodiments of the present invention, as illustrated in FIG. 6, similar to the first curved surface 2140, the second curved surface 2150 is also designed as an arc surface. In this way, when the polymer in the molten state flows through the second curved surface 2150, a force of the second curved surface 2150 on the polymer is perpendicular to the second curved surface 2150, which makes the polymer flow through the second curved surface 2150 more stable and less likely to experience a flow disruption. Further, the second curved surface 2150 has a radius of R2, where 0.5 mm≤R2≤2 mm. For example, R2 is 0.5 mm, 1 mm, 1.5 mm, or 2 mm. Preferably, R2 is 1 mm. Therefore, better flow guidance is provided for the polymer in the molten state.

In some embodiments of the present invention, as illustrated in FIG. 4 and FIG. 5, the main body portion 2200 has a second inner wall surface 2210. The second inner wall surface 2210 has a groove 2211. With the groove 2211, bonding strength between the second inner wall surface 2210 and the plastic layer 4000 is enhanced, preventing the plastic layer 4000 from falling off.

Specifically, a connection between the pipe joint 2000 and the joint fitting 3000 is realized through the main body portion 2200. For example, an outer wall surface of the main body portion 2200 is defined as a second outer wall surface 2220. The second outer wall surface 2220 has external threads. The joint fitting 3000 may be connected to the main body portion 2200 through threads to realize flow of water. In the axial direction of the pipe joint 2000 and in a direction away from the shoulder portion 2100, a temperature of the main body portion 2200 becomes lower, which is due to a fact that, the shoulder portion 2100 is located in the water storage cavity 1100 and thus has a relatively higher temperature due to an influence of a temperature of the water, while an end of the main body portion 2200 away from the shoulder portion 2100 is located outside the water storage cavity 1100 and thus has a relatively lower temperature. Further, during a cycle of water temperature increases and water temperature decreases, the plastic layer 4000 is susceptible to contraction and detachment from the inner wall surface 2001 of the pipe joint 2000 due to an influence of temperature changes. To this end, in this embodiment, the second inner wall surface 2210 of the main body portion 2200 has the groove 2211. The groove 2211 is a space grooveed with respect to the second inner wall surface 2210. The polymer in the molten state flows through the second inner wall surface 2210, fills the groove 2211, and can be retained in the groove 2211 during a process of being molded into the plastic layer, enhancing the bonding strength between the plastic layer 4000 and the second inner wall surface 2210 to prevent the plastic layer 4000 from detaching from the second inner wall surface 2210. For example, the groove 2211 is open towards a center axis of the main body portion 2200. The groove 2211 may have a depth designed to range from 0.5 mm to 1 mm, preferably 0.7 mm, and have an opening width designed to range from 1 mm to 3 mm, preferably 2 mm.

In some embodiments of the present invention, the groove 2211 is designed to extend in a circumferential direction of the second inner wall surface 2210, which can further enhance the bonding strength between the plastic layer 4000 and the second inner wall surface 2210. For example, the groove 2211 is designed to be in a ring shape. In this way, a certain constraining force can be exerted on the plastic layer 4000 in the circumferential direction of the second inner wall surface 2210, which can further inhibit a deformation of the plastic layer 4000 due to the contraction.

As illustrated in FIG. 5, in some embodiments of the present invention, the second inner wall surface 2210 has a plurality of grooves 2211 arranged at intervals in an axial direction of the main body portion 2200. It should be understood that the plurality of grooves 2211 mean two and more grooves 2211. Since the pipe joint 2000 needs to be connected to both the water heater inner tank 1000 and the joint fitting 3000, the pipe joint 2000 has a certain length in an axial direction of the pipe joint 2000. Correspondingly, the plastic layer 4000 also needs to be formed through performing coating in the axial direction of the pipe joint 2000. To this end, the plurality of grooves 2211 arranged at intervals are formed to effectively prevent the plastic layer 4000 from detaching from the second inner wall surface 2210 of the main body portion 2200.

As illustrated in FIG. 5, in some embodiments of the present invention, the groove 2211 is formed below half of a height of the main body portion 2200. In this way, effective bonding between the plastic layer 4000 and the second inner wall surface 2210 can be realized to avoid the detachment of the plastic layer 4000. Also, difficulty of processing can be effectively reduced to improve a processing efficiency.

Specifically, the so-called height is a length of the pipe joint 2000 in the axial direction of the pipe joint 2000. When the pipe joint 2000 is assembled to the water heater inner tank 1000, a part of the main body portion 2200 above half of the height of the main body portion 2200 abuts against the water heater inner tank 1000, while a part of the main body portion 2200 below half of the height of the main body portion 2200 is away from the water heater inner tank 1000. The groove 2211 is formed at the part of the main body portion 2200 below half of the height of the main body portion 2200, which is due to a fact that a possibility that the plastic layer 4000 contracts due to alternating temperature changes increases as the main body portion 2200 becomes further away from the water heater inner tank 1000 and decreases as the main body portion 2200 becomes closer to the water heater inner tank 1000. Therefore, forming the groove 2211 at the part of the main body portion 2200 below half of the height of the main body portion 2200 effectively enhances the bonding strength between the plastic layer 4000 at the part of the main body portion 2200 below half of the height of the main body portion 2200 and the second inner wall surface 2210, without manufacturing the groove 2211 at the second inner wall surface 2210 of the entire main body portion 2200, which improves a manufacturing efficiency.

In some embodiments of the present invention, as illustrated in FIG. 1, FIG. 2, FIG. 3, and FIG. 5, the main body portion 2200 defines a second through opening 2003. The shoulder portion 2100 defines a first through opening 2002. The groove 2211 is located adjacent to and in communication with the second through opening 2003. Specifically, since the shoulder portion 2100 needs to be inserted into the water heater inner tank 1000, the first through opening 2002 is in (direct or indirect) communication with the water storage cavity 1100. The main body portion 2200 is connected to the joint fitting 3000, and thus the second through opening 2003 is in (direct or indirect) communication with the joint fitting 3000. In view of this, the plastic layer 4000 corresponding to the second through opening 2003 is the furthest away from the water heater inner tank 1000 and is most affected by the temperature change. Therefore, one of the plurality of grooves 2211 may be designed to be adjacent to and in communication with the second through opening 2003. In this way, the plastic layer 4000 is better bonded to a periphery of the second through opening 2003 to prevent the plastic layer 4000 corresponding to the entire pipe joint 2000 from being affected due to a separation between the plastic layer 4000 and an end of the main body portion 2200.

In a second aspect of the present invention, a water heater is disclosed. The water heater comprises the pipe joint 2000 according to any of the above embodiments, the water heater inner tank 1000, and the plastic layer 4000. The plastic layer 4000 is disposed at the inner wall surface 2001 of the pipe joint 2000 and the inner surface 1400 of the water heater inner tank 1000 to protect the pipe joint 2000 and the water heater inner tank 1000. An engagement between the pipe joint 2000, the water heater inner tank 1000, and the plastic layer 4000 is described above and will not be repeated herein. It should be understood that, since the pipe joint 2000 of the water heater according to the embodiment adopts the technical solutions according to the above embodiments, the water heater at least provides the advantageous effects brought about by the technical solutions according to the above embodiments.

Further, since the pipe joint 2000 is inserted into the mounting hole 1200 by means of the shoulder portion 2100, and the main body portion 2200 abuts against the outer surface 1300 of the water heater inner tank 1000. Based on this structure, the connection between the pipe joint 2000 and the water heater inner tank 1000 is realized through welding. Specifically, at an intersection of the main body portion 2200 and the outer surface 1300 of the water heater inner tank 1000, the main body portion 2200 and the water heater inner tank 1000 are welded together in a circumferential direction of the pipe joint 2000, which is not only easy to operate (there is a sufficient operation space outside the water heater inner tank 1000), but also prevents welding debris from entering the water storage cavity 1100.

Although some embodiments of the present invention are described above, the scope of the present invention is not limited to the embodiments. Any equivalent structure transformation made using the contents of the specification and the accompanying drawings of the present invention, or any direct or indirect application of the contents of the specification and the accompanying drawings of the present invention in other related fields, made within the concept of the present invention shall fall within the scope of the present invention.

## Claims

1. A pipe joint, comprising:
a main body portion adapted to abut against an outer surface of a water heater inner tank; and
a shoulder portion disposed at the main body portion and adapted to be inserted into the water heater inner tank, the shoulder portion having an end face and a first inner wall surface, and a first curved surface being formed between the end face and the first inner wall surface.

2. The pipe joint according to claim 1, wherein the first curved surface is an arc surface.

3. The pipe joint according to claim 2, wherein the first curved surface has a radius of R1, where 0.5 mm≤R1≤2 mm.

4. The pipe joint according to any one of claims 1 to 3, wherein the shoulder portion is higher than an inner surface of the water heater inner tank.

5. The pipe joint according to claim 4, wherein the shoulder portion has a first outer wall surface, a second curved surface being formed between the end face and the first outer wall surface.

6. The pipe joint according to claim 4 or 5, wherein the second curved surface is an arc surface.

7. The pipe joint according to any one of claims 4 to 6, wherein the second curved surface has a radius of R2, where 0.5 mm≤R2≤2 mm.

8. The pipe joint according to any one of claims 1 to 7, wherein the main body portion has a second inner wall surface, the second inner wall surface having a groove.

9. The pipe joint according to claim 8, wherein:
the groove extends in a circumferential direction of the second inner wall surface; and/or
the second inner wall surface has a plurality of grooves arranged at an interval in an axial direction of the main body portion .

10. The pipe joint according to claim 8 or 9, wherein the groove is formed below half of a height of the main body portion .

11. The pipe joint according to any one of claims 8 to 10, wherein:
the shoulder portion defines a first through opening;
the main body portion defines a second through opening; and
the groove is located adjacent to and is in communication with the second through opening.

12. A water heater, comprising:
a pipe joint according to any one of claims 1 to 11;
a water heater inner tank; and
a plastic layer disposed at an inner surface of the water heater inner tank and an inner wall surface of the pipe joint.

13. The water heater according to claim 12, wherein the pipe joint is welded to an outer surface of the water heater inner tank along a circumferential direction of the pipe joint.
